# EUROPEAN PATENT SPECIFICATION

(11) **EP 1 728 673 B1**
(45) Date of publication and mention of the grant of the patent: **12.12.2007**
(21) Application number: 05425388.5
(22) Date of filing: 30.05.2005
(51) Int. Cl.: B60N 2/06

(54) **A configurable seat assembly for a vehicle**
Verstellbare Sitzanordnung für ein Kraftfahrzeug
Ensemble de siège réglable pour véhicule automobile

(43) Date of publication of application: 06.12.2006
(73) Proprietor: C.R.F. SOCIETA' CONSORTILE PER AZIONI, 10043 Orbassano (Torino) (IT)
(72) Inventor: Masoero, Giorgio, c/o C.R.F. Soc.Consort.per Az., 10043 Orbassano (IT); Demontis Salvatore, c/o C.R.F. Soc.Consort.per Az., 10043 Orbassano (IT); Storgato, Angelo, c/o C.R.F. Soc.Consort.per Az., 10043 Orbassano (IT); Ruspa, Cecilia, c/o C.R.F. Soc.Consort.per Az., 10043 Orbassano (IT); Camardella Pietro, c/o C.R.F. Soc.Consort.per Az., 10043 Orbassano (IT); Pisino, Enrico, c/o C.R.F. Soc.Consort.per Az., 10043 Orbassano (IT)
(74) Representative: Jorio, Paolo

(56) References cited:
- EP-A- 0 943 482
- US-A- 5 137 331
- US-A- 5 529 275

## Description

The present invention relates to a configurable seat assembly for a vehicle.

In passenger compartments of motor vehicles, it is known to provide seats of a configurable type, i.e. seats that can be arranged in different positions according to the number of passengers and the amount of luggage or objects to be carried, so as to exploit in the best possible way the spaces available and render the task of driving and the journey itself as ergonomic as possible.

EP-A-0 943 482 discloses a configurable passenger seat assembly according to the preamble of claim 1.

USS529275 and US5137331 disclose seats which are adjustable to allow easy access to a location behind the seats. In particular, US5529275 discloses a seat track mechanism which provides incremental fore and aft seat adjustment along the length of the seat track, while a floor track mechanism slidably supports the seat track mechanism for full fore and aft placement of the seat track mechanism and the seat. The floor and seat track mechanisms attach in non-parallel relationship to one another, for moving the seat laterally as the seat moves forward along the floor track mechanism to allow the seat to clear an obstacle located in front of the seat. US5137331 discloses a latching mechanism which engages a latching plate at a multiplicity of positions to establish a comfort setting for the occupant. Two levers rotate when a seat back is tilted forward, to disengage a movable track from a stationary track and to allow the forward movement of the movable track. A pawl mechanism is resiliently biased and mounted on the movable track. The pawl mechanism engages the seat back by a connecting member.

There is felt the need to provide a seat assembly that can undergo a transverse displacement with respect to the longitudinal direction of advance of the vehicle in a simple and fast way, in particular executed by the driver or by a passenger sitting in his own seat alongside said seat assembly, without this fact preventing other adjustments of position (longitudinal adjustment, height adjustment, adjustment of the inclination of the backrest, adjustment of the headrest, etc.) from being envisaged.

Preferably, there is felt the need to provide a configurable seat assembly that will present one or more armrests and surfaces equipped, for example, with containers and trays, to optimize the comfort of the driver and/or of passengers that occupy the adjacent seats in the passenger compartment, and that will present low encumbrance and a relatively small number of components.

The aim of the present invention is to provide a configurable seat assembly for a vehicle which will enable the requirements set forth above to be met in a simple and inexpensive way.

According to the present invention, a configurable passenger seat assembly for a vehicle is provided; the passenger seat assembly comprising:
- at least one seat portion; and
- at least one backrest movable with respect to said seat portion between
   a) a raised position, to receive a passenger, and
   b) a lowered position, in which said backrest is laid down flat on said seat portion;
characterized in that said seat portion is movable in a transverse direction, horizontal and orthogonal to a longitudinal direction of advance of said vehicle between
- a first configuration, in which said seat portion is moved, in use, closer to a driver seat and said backrest is set in said lowered position, and
- a second configuration, in which said seat portion is set, in use, transversely at a distance from said driver seat and said backrest is set in said raised position;
and characterised by comprising moving means for translating said seat portion between said first and second configurations in response to a displacement of said backrest with respect to said seat portion.

Preferably, said seat portion translates in said transverse direction in response to a rotation of said backrest about an axis of hinge parallel to said transverse direction.

For a better understanding of the present invention there is now described a preferred embodiment thereof, purely by way of non-limiting example, with reference to the attached plate of drawings, wherein:
- Figure 1 is a perspective view of a preferred embodiment of a configurable seat assembly for a vehicle made according to the present invention and set in a first functional position;
- Figure 2 is a front view of the seat assembly of Figure 1 set in a second functional position;
- Figure 3 is a front view of the seat assembly of Figure 1 set in the first functional position;
- Figures 4 and 5 are perspective views, at an enlarged scale, of a frame of the seat assembly of Figure 1, in the first functional position and, respectively, in the second functional position;
- Figures 6 and 7 are, respectively, a perspective view from beneath and a side view of a detail, at an enlarged scale, of Figure 4;
- Figures 8 and 9 are, respectively, a perspective view from beneath and a side view of a detail, at an enlarged scale, of Figure 5;
- Figure 10 is a perspective view, at an enlarged scale, of the reverse side of the backrest, hereinafter referred to as retro-backrest, of the seat assembly of Figure 1;
- Figure 11 is a perspective view, at an even further enlarged scale, of an armrest of Figure 10, set in a completely raised position; and
- Figure 12 is a side view, with parts removed for reasons of clarity, of the armrest of Figure 11, set in a different operative position.

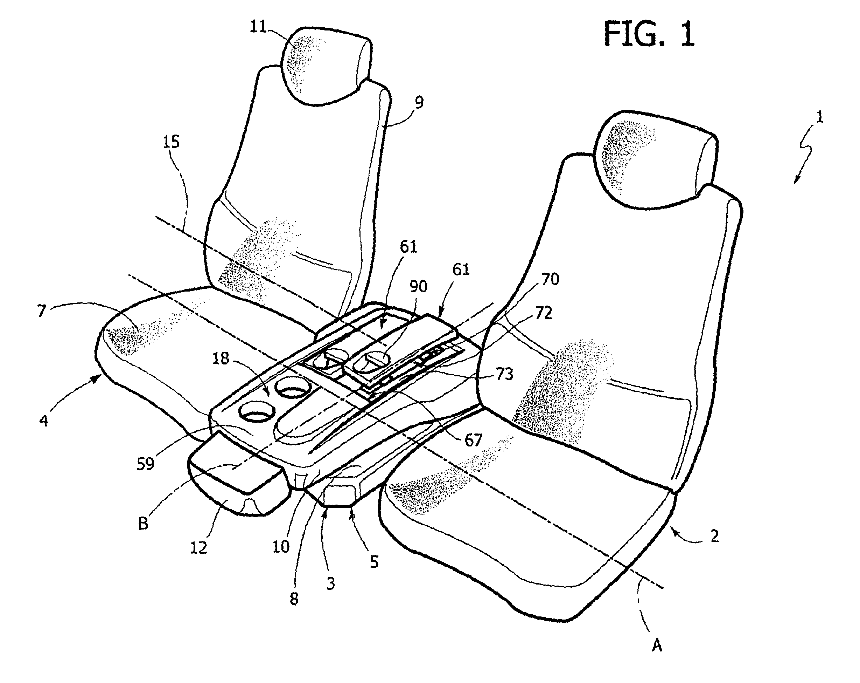

In Figure 1, the reference number 1 designates, as a whole, a passenger compartment of a vehicle housing a front driving seat 2, of a type that is known and is not described in detail herein, and a front seat assembly 3 for passengers, set alongside the seat 2 in a transverse direction A, i.e. in a horizontal direction orthogonal to a longitudinal axis B of advance of the motor vehicle.

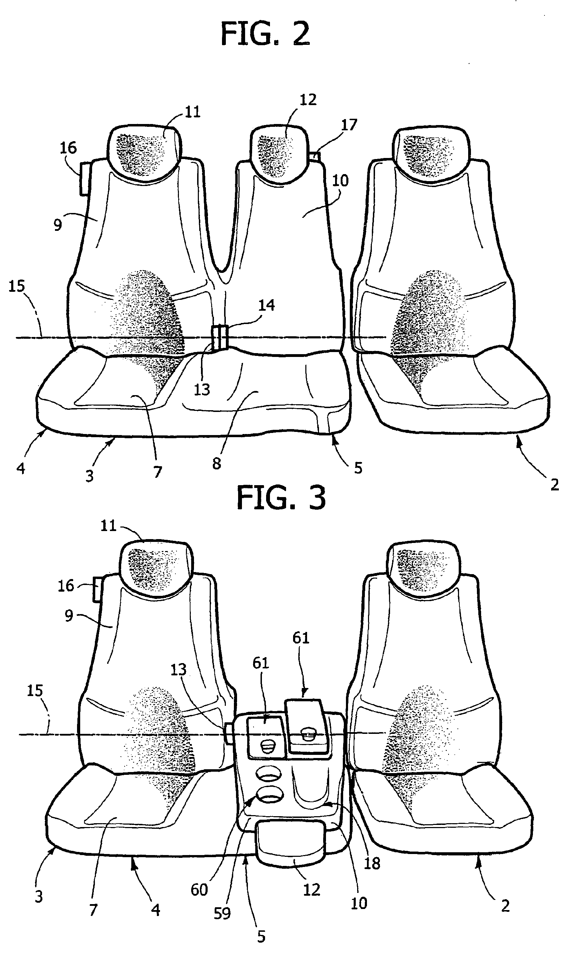

The seat assembly 3 comprises an external side seat 4 and a central seat 5, set alongside one another, having the same frame 6 (described in detail in what follows), and comprising respective seat portions 7, 8 joined to one another, and respective backrests 9, 10, which are provided with respective headrests 11, 12 and have an inclination that is adjustable, by means of respective devices 13, 14 known and not described in detail herein (schematically illustrated in Figure 2), independently of one another about an axis 15 parallel to the direction A.

The backrests 9, 10 can be tipped down about the axis 15 independently of one another, from a raised position to a horizontal lowered position, where they are laid down flat on the respective seat portions 7, 8, after manual actuation of respective controls 16, 17 for release (schematically illustrated in Figure 2), for example, levers carried by the backrests 9 and 10, respectively, for actuation of respective retention devices (known and not illustrated).

In particular, the backrests 9, 10 are provided with respective retro-backrests, i.e. rigid elements for rear covering or coating (of which only that of the backrest 10 is visible), which define, in the lowered position, an equipped resting surface 18.

Alternatively, the rear faces of the backrests 9, 10 are defined by upholstery material.

With reference to Figures 2 and 3, the seat assembly 3 is configurable between a first functional position, in which the seat 4 can receive a passenger, whilst the seat 5 is moved up against the seat 2 with the backrest 10 set in the lowered position on the seat portion 8, and a second functional position, in which the seat 5 is set transversely at a distance from the seat 2 and can receive a corresponding passenger.

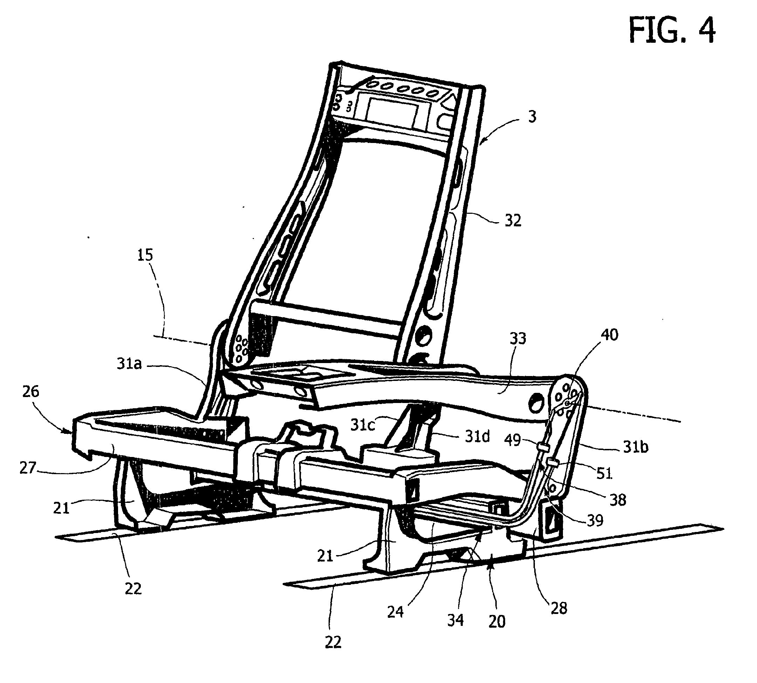

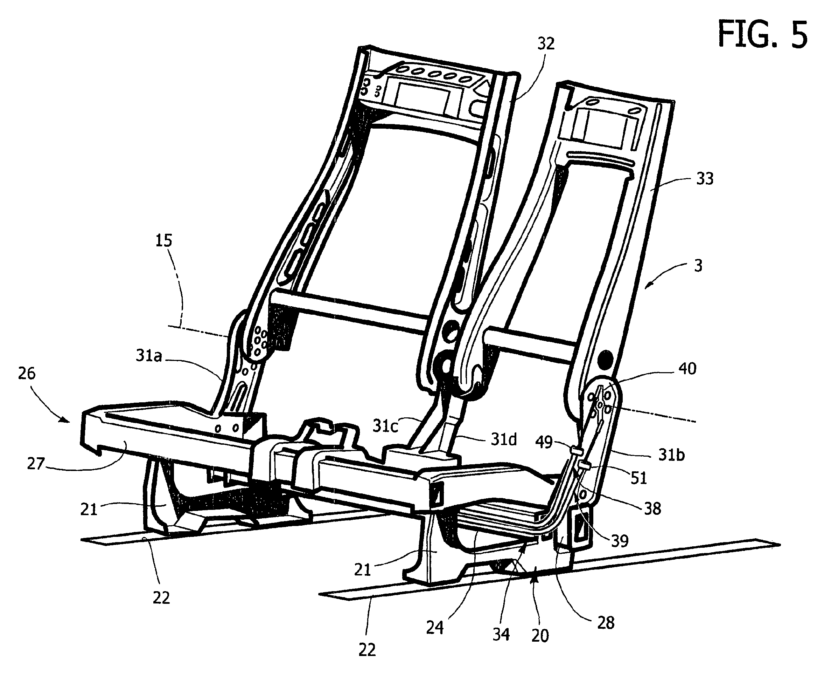

With reference to Figures 4 and 5, the frame 6 comprises a bottom structure 20, which is set in a fixed transverse position and comprises two side legs 21, which can slide longitudinally along respective guides 22 (illustrated schematically) fixed on the floor of the passenger compartment 1. To keep the structure 20 in a fixed longitudinal position along the guides 22, there is provided a releasable retention device (known and not illustrated), which can be unclamped by means of a manual action on a release device (also known and not illustrated), for example a lever carried by the structure 20 between the legs 21, to enable adjustment of the longitudinal position of the seat assembly 3.

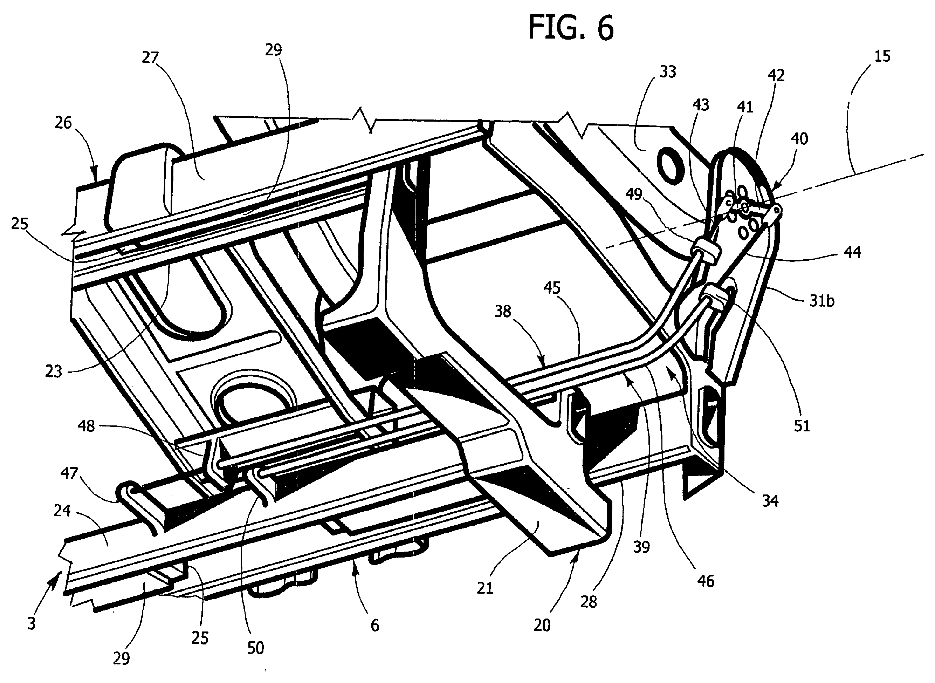

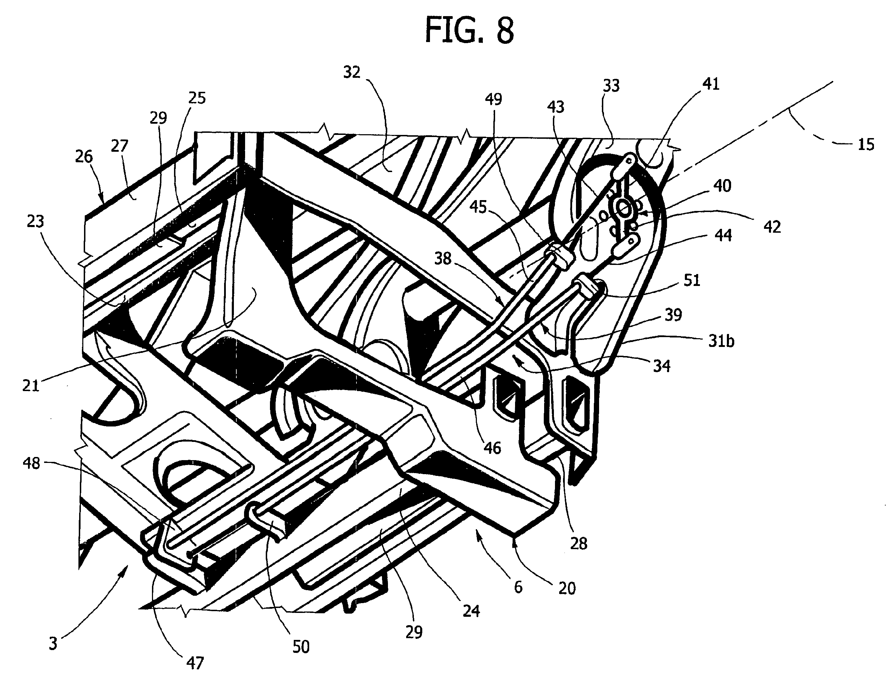

The structure 20 moreover comprises a front cross member 23 and a rear cross member 24, which are fixed to the legs 21 in longitudinal positions set at a distance from one another and carry, in fixed positions, respective guides 25 (Figures 6 and 8) for guiding, in the direction A, a top structure 26 that carries the seat portions 7, 8.

The structure 26 comprises, in particular, a front cross member 27, set in front of the cross member 23, and a rear cross member 28, set behind the cross member 24 (obviously, said relative positions between the cross members 27, 23 and the cross members 28, 24, could be reversed).

The cross members 27, 28 carry, in fixed positions, respective slides 29, which are slidably coupled to the guides 25 and are designed to be clamped with respect to the guides 25 by means of a further retention device (not illustrated) to keep the seat assembly 3 in the two functional positions. Said further retention device is released by manual actuation of a release control, in particular the control 17, to be able then to translate the structure 26 and hence the seats 4, 5 transversely.

The structure 26 then comprises two side rear brackets 31a, 31b and two central rear brackets 31c, 31d, which extend in cantilever fashion upwards with respect to the cross member 28. The pair of brackets 31a, 31c and the pair of brackets 31b, 31d carry hinged at their top ends, about the axis 15, respective structures 32, 33, which in turn carry the backrests 9, 10 and the headrests 11, 12. In particular, the structure 33 and hence the seat 5 have a smaller width, in the direction A, than that of the structure 32 and the seat 4.

With reference to Figures 2 and 3, the translation of the seats 4, 5 between the two aforesaid functional positions, i.e. along a travel of approach to the seat 2 or else a travel of withdrawal from the seat 2, is approximately 63 mm. The translation, along at least one of said travels of approach and of withdrawal, is obtained in response to a displacement of the backrest 10 with respect to the seat portion 8, in particular in response to a rotation of the backrest 10 about the axis 15 away from and towards a vertical position through an angle greater than 25° forwards. In other words, the position of the backrest 10 and the transverse position of the seats 4, 5 are mutually dependent.

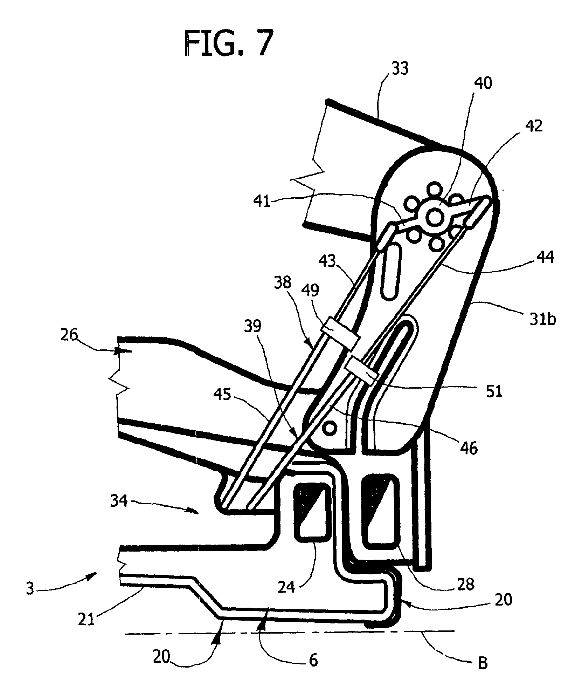

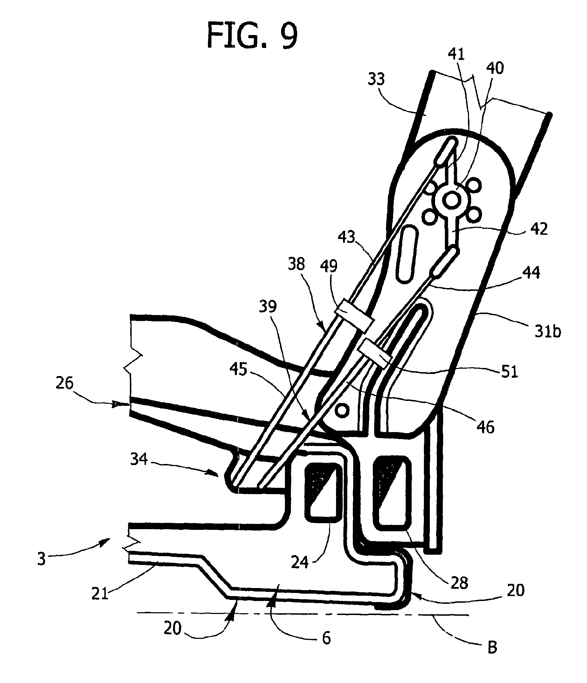

According to the preferred embodiment illustrated in Figures 4-9, there is provided a mechanical transmission 34 to bring about approach of the seats 4, 5 to the seat 2 when the backrest 10 is tipped down forwards on the seat portion 8, and to bring about withdrawal when the backrest 10 is tipped back towards its raised position. However, according to a solution (not illustrated), an electric motor could be provided, either rotary or linear, which translates the seats 4, 5 transversely in response to the displacement of the backrest 10.

According to what is illustrated in Figures 4-9, the transmission 34 is of the flexible-transmission type and comprises two Bowden cables, designated by 38 and 39, and a rocker lever 40, which can turn about the axis 15 jointly with respect to the structure 33, projects axially from the bracket 31b towards the seat 2, and comprises two radial arms 41, 42 diametrally opposite to one another.

The cables 38, 39 comprise respective cores 43, 44 of fixed length, capable of flexing and of transmitting actions of tensile force, and respective sheaths 45, 46 of substantially fixed length, capable of flexing and transmitting actions of pressure along their own length. The core 43, at its ends, is fixed to the arm 41 and to an appendage 47 carried in a fixed position by the structure 20, and traverses two appendages 48, 49 carried in fixed positions by the structure 26 and, respectively, by the bracket 31b, whilst the sheath 45 has its own ends coupled to the appendages 48, 49.

In turn, the core 44, at its ends, is fixed to the arm 42 and to the appendage 48, and traverses two appendages 50, 51 carried in fixed positions by the structure 20 and, respectively, by the bracket 31b, where the appendages 50 and 47 are arranged on opposite sides of, and aligned to, the appendage 48 in the direction A. The sheath 46, instead, has its own ends coupled to the appendages 50, 51 and has a longitudinal development greater than the maximum distance between the appendages 50, 51.

When the backrest 10 is tipped forwards from the raised position into the lowered position, the lever 40 rotates forwards (in a counterclockwise direction as viewed in the figures) and pulls the core 44 towards the outside of the sheath 46 through the appendage 51, which exerts a reaction in regard to rotation of the lever 40 and transmits it to the sheath 46 itself. The sheath 46 in turn transmits said reaction throughout its length in the form of an action of pressure, up to the appendage 50. Said pressure behaves like a thrust of the sheath 46 against the appendage 50 in the direction A and consequently brings about the relative motion between the appendage 50 and the structure 26 that carries the appendage 51.

During said relative motion, i.e. during translation of the structure 26 towards the first operative position, the sheath 46 is progressively distended, i.e. it assumes a more linear configuration, between the appendages 50, 51, while maintaining substantially fixed the length of its own development. At the same time, the sheath 45 slides on the core 43.

Likewise, when the backrest 10 is tipped back from the lowered position towards the raised one, the lever 40 rotates backwards (in a clockwise direction as viewed in the figures) and pulls the core 43 towards the outside of the sheath 45 through the appendage 49, which exerts a reaction in regard to rotation of the lever 40 and transmits it to the sheath 45 itself. Whilst the core 43 is in tension, the sheath 46 in turn transmits the aforesaid reaction, throughout its length, in the form of an action of pressure, up to the appendage 48. Said pressure behaves like a thrust exerted by the sheath 45 in the direction A against the appendage 48, which consequently is displaced with respect to the core 43 towards the appendage 47.

During translation of the structure 26 towards the second operative position, the appendage 51 approaches the appendage 50, so that the sheath 46 progressively assumes a less linear configuration between the appendages 50, 51, while maintaining substantially fixed the length of its own development, whilst the core 44 slides in the sheath 46 itself.

According to a variant (not illustrated), there could be provided elastic means that are set between the structures 20 and 26 and are pre-loaded along one of the travels of approach and withdrawal to exert an action of thrust and bring about an automatic displacement along the other of the travels of approach and withdrawal of the seats 4, 5, when the slides 29 are released from the guides 25 by manual actuation of the control 17. In particular, the control 17 is coupled to the retention devices retaining the sliding of the slides 29 and the tipping of the backrest 10 by means of transmissions (not illustrated), which can be chosen from among the conventional ones available.

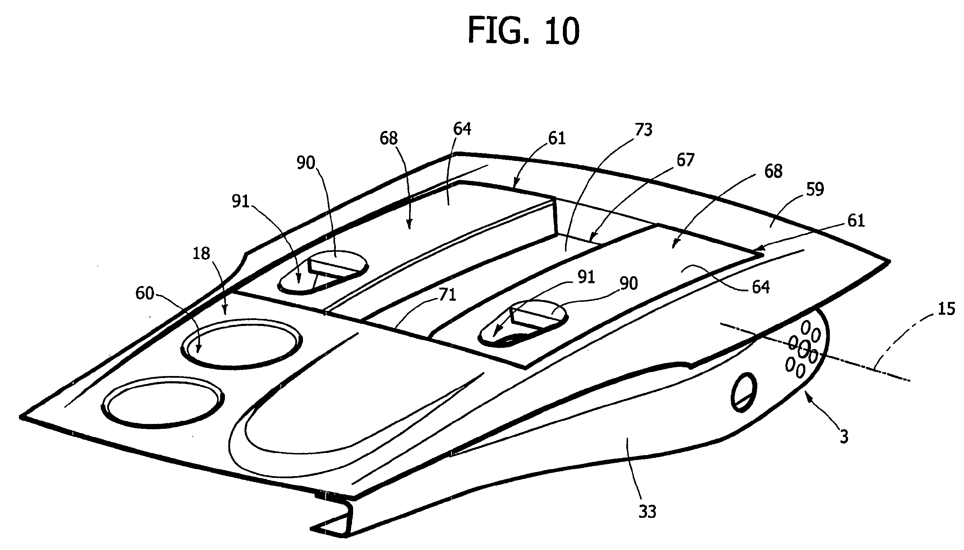

According to what is illustrated in Figure 10, the retro-backrest of the seat 5 is designated by the reference number 59, is coupled in a fixed position to the structure 33, in a way not described in detail, and has a plurality of trays or containers 60.

Two armrests 61 are arranged on the retro-backrest 59, i.e. on the rear face of the backrest 10, in a positions set alongside one another for resting of an arm of the driver of the seat 2 and, respectively, of the passenger of the seat 4. Each armrest 61 comprises an attachment structure defined by two longitudinal guides 63 fixed to the structure 33, a resting body 64, and a device 66 for connection of the body 64 to the guides 63. Thanks to the device 66, the body 64 is movable between a stowed-away position, in which it is housed in the backrest 10, in particular in a recess 67 of the retro-backrest 59, and an extracted position, in which a surface 68 of the body 64 functions as armrest for the user. In particular, when the body 64 is set in its stowed-away position, the surface 68 extends flush with or as prolongation of the surface 18 (Figure 10).

Incidentally, here and in what follows, the terms "front", "rear", "top", "bottom", "forwards", "backwards", etc. are to be understood for the armrest 61 with reference to the case where the backrest 10 is tipped down.

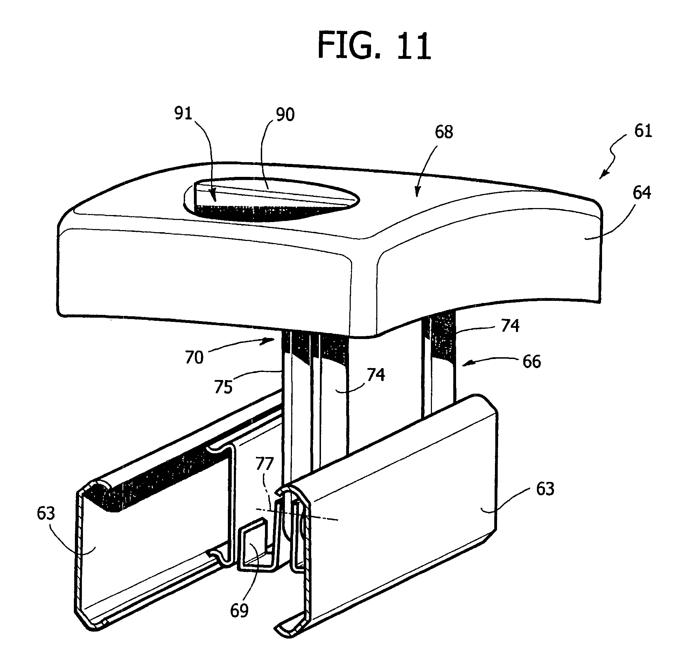

With reference to Figure 11, the device 66 comprises a slide member 69 set between the guides 63 and slidably coupled to the guides 63 themselves to be able to displace the body 64 longitudinally forwards, i.e. towards the headrest 12, up to an advanced end-of-travel position. Preferably, there is provided a retention and adjustment device (not illustrated), for example of the snap-action type or friction type, to retain the member 69 in the chosen longitudinal position in a releasable way.

The device 66 moreover comprises an articulated quadrilateral 70 for displacing the body 64 in height with respect to the surface 18 between a lowered position corresponding to the aforesaid stowed-away position (Figure 10), and a completely raised position (Figure 11). In particular, the recess 67 has a front wall 71, which prevents the body 64 from advancing along the guides 63 until it has been raised by a minimum height out of the recess 67 itself.

The articulated quadrilateral 70 traverses a longitudinal slit 72 (Figure 1) made in an end wall 73 of the recess 67, and comprises a pair of rear connecting rods 74, set at a transverse distance apart from one another, and a front connecting rod 75, set centrally with respect to the connecting rods 74.

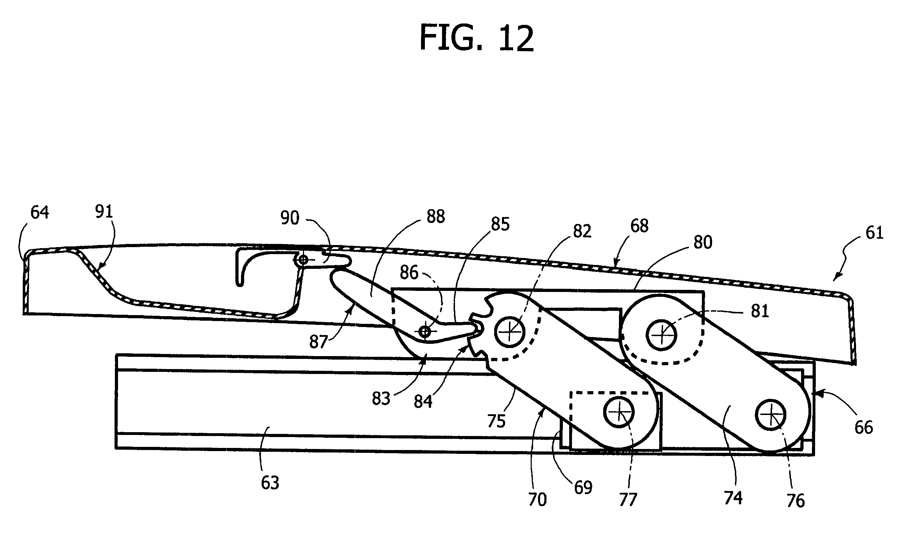

With reference to Figure 12, the bottom ends of the pair of connecting rods 74 and of the connecting rod 75 are hinged to the member 69 about respective axes 76, 77 parallel to the axis 15. Instead, the top ends of the pair of connecting rods 74 and of the connecting rod 75 are hinged to a member 80 for supporting the body 64, about respective axes 81, 82, which are also parallel to the axis 15.

To retain the body 64 at the desired height between a plurality of positions in height, there is provided a ratchet-like adjustment device 83, which comprises a toothing 84 made on the periphery of the top ends of the connecting rod 75, about the axis 82, and a pawl 85 hinged to the member 80 about an axis 86 parallel to the axis 82 and facing radially towards the toothing 84.

The pawl 85 performs the function of strut and prevents rotation of the connecting rod 75 forwards (in a counterclockwise direction as viewed in Figure 12) and hence lowering of the body 64, when it engages any of the slots of the toothing 84. Preferably, there is provided an elastic positioning element (not illustrated) to push the pawl 85 so that it engages the toothing 84, i.e. in a clockwise direction as viewed in Figure 12.

The pawl 85 defines the end of a rocker 87 comprising, on the diametrally opposite side, an arm 88, which can be rotated (in a counterclockwise direction as viewed in Figure 12) by manual actuation of a control 90, in particular a lever, to move the pawl 85 away from the toothing 84 upwards, so as to leave the body 64 free to be lowered.

In particular, with reference to Figure 10, the lever 90 covers the rear part of an opening 91 made through the surface 68, and can be rotated manually, in a clockwise direction as viewed in Figure 12, to push the arm 88 downwards and thus disengage the pawl 85, by insertion of one's fingers through the uncovered front part of the opening 91.

Instead, to lift the body 64, it is sufficient to pull the body 64 itself upwards, in so far as the toothing 84 and the pawl 87 are shaped in such a way as to slide on top of one another until the pawl 87 engages in the desired slot.

In use, when it is necessary to transport two passengers on the seat assembly 3, the latter is brought into the second operative position, by simply raising the backrest 10, so as to have more space in the direction A for the passenger sitting on the seat 5. When, instead, it is necessary to carry just one front-seat passenger, the seats 4, 5 can be displaced into the first functional position by sending the backrest 10 down: in this way, the surface 18 defined by the retro-backrest 59 contributes to rendering the journey more comfortable for the driver and the passenger on the seat 4, and at the same time the passenger on the seat 4 has available more space at the side between himself and the door (not illustrated) alongside the seat assembly 3.

In addition, also the armrests 61 arranged on, or carried by, the rear face of the backrest 10 can be raised from their stowed-away position, to contribute to improved ergonomics in the passenger compartment 1 on the front seats. In particular, thanks to their own possibilities of longitudinal adjustment and height adjustment, the positions of the resting bodies 64 can be adapted to drivers and passengers of different size/height, independently of the longitudinal position of the structure 20 along the guides 22 located on the floor.

From the foregoing it appears evident how the seat assembly 3 will enable a good compromise to be achieved between ergonomics, comfort and number of passengers carried, thanks to the transverse translation of the seats 4, 5, and will be configurable in an extremely simple way, thanks to the fact that the same transverse translation is obtained in response to a displacement of the backrest 10.

It is then evident how the transverse translation provided for the seats 4, 5 does not hamper longitudinal adjustment of the seats 4, 5 themselves and adjustment of the inclination of the backrests 9, 10.

The transmission 34 provided to achieve the transverse translation is, moreover, relatively simple, inexpensive and reliable.

The characteristics of the seat assembly 3 moreover afford a solution that particularly compact as well as being flexible, and can advantageously be applied not just in vehicles having three front seats, as described above by way of example, but also in vehicles with single seats, instead of double seats, and/or is applicable to rear seats, instead of front seats.

The advantages of compactness are then rendered even more evident by the particular location and by the possibilities of adjustment of the armrests 61.

Finally, it is clear that modifications and variations can be made to the seat assembly 3 described and illustrated herein, without thereby departing from the sphere of protection of the present invention, as defined in the annexed claims.

In particular, there could be provided a device for height adjustment of the seat portions 7, 8, for example included in the structure 20.

In addition, there could be provided an electric motor for tipping the backrest 10 about the axis 15, instead of providing a forward/backward tipping of a manual type, but always with an angular displacement in response to which at least one between the seats 4, 5 translates transversely.

In addition, there could be provided connection devices different from the ones described by way of example for connecting the body 64 to the backrest 10 in a movable way.

## Claims

1. A configurable passenger seat assembly (3) for a vehicle; the passenger seat assembly comprising:
- at least one seat portion (8); and
- at least one backrest (10) movable with respect to said seat portion (8) between
a) a raised position, to receive a passenger, and
b) a lowered position, in which said backrest (10) is laid down flat on said seat portion (8);
**characterized in that** said seat portion (8) is movable in a transverse direction (A), horizontal and orthogonal to a longitudinal direction (B) of advance of said vehicle between
- a first configuration, in which said seat portion (8) is moved, in use, closed to a driver seat (2) and said backrest (10) is set in said lowered position, and
- a second configuration, in which said seat portion (8) is set, in use, transversely at a distance from said driver seat (2) and said backrest (10) is set in said raised position;
and by comprising moving means (34) for translating said seat portion (8) between said first and second configurations in response to a displacement of said backrest (10) with respect to said seat portion (8).

2. The passenger seat assembly according to Claim 1, **characterized in that** said seat portion (8) translates in said transverse direction (A) in response to a rotation of said backrest (10) about an axis of hinge (15) parallel to said transverse direction (A).

3. The passenger seat assembly according to Claim 2, **characterized by** comprising two seats (4, 5) set alongside one another and movable jointly in said transverse direction (A) between said first and second configuration in response to said rotation of said backrest (10).

4. The passenger seat assembly according to Claim 3, **characterized in that** said backrest (10) forms part of a seat (5) set, in use, in a central position adjacent to said driver seat (2).

5. The passenger seat assembly according to any one of Claims 2 to 4, **characterized in that** said seat portion (8) translates in a transverse direction (A) in response to a rotation of said backrest (10) by an angle greater than 25° with respect to a vertical direction.

6. The passenger seat assembly according to Claim 5, **characterized in that** said seat portion (8) translates in a transverse direction (A) in response to said backrest (10) being tipped back between said lowered position and said raised position.

7. The passenger seat assembly according to any one of Claims 2 to 5, **characterized in that** said moving means (34) comprise first moving means (38) for translating said seat portion (8) transversely in one direction in response to a rotation of said backrest (10) in one direction, and second moving means (39) for translating said seat portion (8) in the opposite direction in response to a rotation of said backrest (10) in the opposite direction.

8. The passenger seat assembly according to any one of Claims 2 to 7, **characterized in that** said moving means (34) comprise a mechanical transmission.

9. The passenger assembly according to Claim 8, **characterized by** comprising a transversely fixed structure (20) and a transversely slidable structure (26) coupled to one another; said backrest (10) being carried by said transversely slidable structure (26); said moving means (34) comprising a lever (40), which can turn jointly with said backrest (10) with respect to said transversely slidable structure (26) about said axis of hinge (15).

10. The passenger seat assembly according to Claim 9, **characterized in that** said moving means (34) comprise a cable transmission (38, 39) connected to said lever (40).

11. The passenger seat assembly according to Claim 10, **characterized in that** said lever is a rocker lever comprising two opposed radial arms (41, 42), and **in that** said transmission comprises two Bowden cables (38, 39) comprising respective sheaths (45, 46) and respective cores (43, 44); said cores (43, 44) comprising respective ends, each fixed to a corresponding said radial arm (41, 42); said sheaths (45, 46) comprising respective first ends coupled to a portion (31b) of said transversely slidable structure (26) and respective second ends coupled to said transversely slidable structure (26) and, respectively, to said transversely fixed structure (20).

12. The passenger seat assembly according to any one of the preceding claims, **characterized by** comprising at least one armrest (61) set on a rear face (59) of said backrest (10).

13. The passenger seat assembly according to Claim 12, **characterized in that** said armrest (61) comprises a resting body (64) and means of connection (66) for displacing said resting body (64) between a stowed-away position, in which it is at least in part housed in said backrest (10), and an extracted position, in which it performs the function of armrest for a user.

14. The passenger seat assembly according to Claim 13, **characterized in that** said rear face is defined by a retro-backrest (59), and **in that**, in said stowed-away position, a top surface (68) of said resting body (64) extends flush with an outer surface (18) of said retro-backrest (59).

15. The passenger seat assembly according to Claim 13 or Claim 14, **characterized in that** said armrest (61) comprises guide-and-slide means (63, 69) for enabling a displacement of said resting body (64) in said longitudinal direction (B).

16. The passenger seat assembly according to any one of Claims 13 to 15, **characterized in that** said means of connection (66) comprise an adjustment device (83) for positioning said resting body (64) in a plurality of positions in height.

17. The passenger seat assembly according to Claim 16, **characterized in that** said adjustment device comprises a ratchet-like device (83).

18. The passenger seat assembly according to any one of Claims 13 to 17, **characterized in that** said means of connection (66) comprise an articulated quadrilateral (70) for displacing said resting body (64) in height.

19. The passenger seat assembly according to Claims 17 and 18, **characterized in that** said ratchet-like device (83) comprises a pawl (85) carried by said resting body (64) and a toothing (84) made on a connecting rod (75) of said articulated quadrilateral (70).

20. The passenger seat assembly according to Claim 19, **characterized in that** said resting body (64) has an opening (91) and carries a lever control (90), which engages part of said opening (91) and can be actuated manually for disengaging said pawl (85) from said toothing (84).

## Patentansprüche

1. Konfigurierbare Fahrgastsitzanordnung (3) für ein Kraftfahrzeug, wobei die Fahrgastsitzanordnung umfasst:
- wenigstens einen Sitzabschnitt (8); und
- wenigstens eine Lehne (10), die in Bezug auf den Sitzabschnitt (8) zwischen
a) einer angehobenen Position zur Aufnahme eines Fahrgastes, und
b) einer abgesenkten Position, in der die Lehne (10) nach unten flach auf den Sitzabschnitt (8) gelegt ist, verstellbar ist;
**dadurch gekennzeichnet, dass** der Sitzabschnitt (8) in einer Querrichtung (A), d.h., horizontal und orthogonal zu einer Längsrichtung (B) des Vortriebes des Kraftfahrzeuges zwischen
- einer ersten Konfiguration, in der der Sitzabschnitt (8) im Betrieb näher an einen Fahrersitz (2) bewegt wird und die Lehne (10) in die abgesenkte Position eingestellt wird, und
- einer zweiten Konfiguration, in der der Sitzabschnitt (8) im Betrieb transversal auf einen Abstand von dem Fahrersitz (2) eingestellt und die Lehne (10) in die angehobene Position eingestellt wird, verstellbar ist;
und dass sie bewegliche Mittel (34) für die Versetzung des Sitzabschnitts (8) zwischen der ersten und zweiten Konfiguration als Antwort auf eine Verstellung der Lehne (10) in Bezug auf den Sitzabschnitt (8) aufweist.

2. Fahrgastsitzanordnung gemäß Anspruch 1, **dadurch gekennzeichnet, dass** sich der Sitzabschnitt (8) in der Querrichtung (A) als Antwort auf eine Drehung der Lehne (10) um eine Achse des Gelenks (15), die parallel zu der Querrichtung (A) ist, versetzt.

3. Fahrgastsitzanordnung gemäß Anspruch 2, **dadurch gekennzeichnet, dass** sie zwei Sitze (4, 5) umfasst, die nebeneinander festgelegt und gemeinsam in der Querrichtung (A) zwischen der ersten und zweiten Konfiguration als Antwort auf die Drehung der Lehne (10) verstellbar sind.

4. Fahrgastsitzanordnung gemäß Anspruch 3, **dadurch gekennzeichnet, dass** die Lehne (10) einen Teil eines Sitzes (5) bildet, der im Betrieb in einer zentralen Position neben dem Fahrersitz (2) festgelegt ist.

5. Fahrgastsitzanordnung gemäß einem der Ansprüche 2 bis 4, **dadurch gekennzeichnet, dass** sich der Sitzabschnitt (8) in einer Querrichtung (A) als Antwort auf eine Drehung der Lehne (10) in einem Winkel größer als 25° in Bezug auf eine vertikale Richtung versetzt.

6. Fahrgastsitzanordnung gemäß Anspruch 5, **dadurch gekennzeichnet, dass** sich der Sitzabschnitt (8) in einer Querrichtung (A) als Antwort auf ein nach hinten Kippen der Lehne (10) zwischen der abgesenkten Position und der angehobenen Position versetzt.

7. Fahrgastsitzanordnung gemäß einem der Ansprüche 2 bis 5, **dadurch gekennzeichnet, dass** die beweglichen Mittel (34) erste bewegliche Mittel (38) für das Versetzen des Sitzabschnitts (8) transversal in eine Richtung als Antwort auf eine Drehung der Lehne (10) in eine Richtung, und zweite bewegliche Mittel (39) für das Versetzen des Sitzabschnitts (8) in die entgegengesetzte Richtung als Antwort auf eine Drehung der Lehne (10) in die entgegengesetzte Richtung umfassen.

8. Fahrgastsitzanordnung gemäß einem der Ansprüche 2 bis 7, **dadurch gekennzeichnet, dass** die beweglichen Mittel (34) eine mechanische Übertragung umfassen.

9. Fahrgastsitzanordnung gemäß Anspruch 8, **dadurch gekennzeichnet, dass** sie eine transversal feste Struktur (20) und eine transversal verschiebbare Struktur (26) umfasst, die miteinander verbunden sind; wobei die Lehne (10) von der transversal verschiebbaren Struktur (26) getragen wird; wobei die beweglichen Mittel (34) einen Hebel (40) umfassen, der sich zusammen mit der Lehne (10) in Bezug auf die transversal verschiebbare Struktur (26) um die Achse des Gelenks (15) drehen kann.

10. Fahrgastsitzanordnung gemäß Anspruch 9, **dadurch gekennzeichnet, dass** die beweglichen Mittel (34) eine mit dem Hebel (40) verbundene Kabelübertragung (38, 39) umfassen.

11. Fahrgastsitzanordnung gemäß Anspruch 10, **dadurch gekennzeichnet, dass** der Hebel ein Kipphebel ist, der zwei gegenüberliegende radiale Arme (41, 42) umfasst und **dadurch gekennzeichnet, dass** die Übertragung zwei Bowdenzüge (38, 39) umfasst, die entsprechende Mäntel (45, 46) und entsprechende Kerne (43, 44) umfassen; wobei die Kerne (43, 44) entsprechende Enden umfassen, wobei jedes an dem entsprechenden radialen Arm (41, 42) befestigt ist; wobei die Mäntel (45, 46) entsprechende erste Enden, die mit einem Abschnitt (31b) der transversal verschiebbaren Struktur (26) verbunden sind, und entsprechende zweite Enden, die mit der transversal verschiebbaren Struktur (26) bzw. mit der transversal festen Struktur (20) verbunden sind, umfassen.

12. Fahrgastsitzanordnung gemäß einem der vorhergehenden Ansprüche, **dadurch gekennzeichnet, dass** sie wenigstens eine Armlehne (61) umfasst, die auf einer Rückseite (59) der Lehne (10) festgelegt ist.

13. Fahrgastsitzanordnung gemäß Anspruch 12, **dadurch gekennzeichnet, dass** die Armlehne (61) einen Ruhekörper (64) und Mittel zur Verbindung (66) zur Versetzung des Ruhekörpers (64) zwischen einer verstauten Position, in der er wenigstens teilweise in der Lehne (10) aufgenommen ist, und einer herausgezogenen Position, in der er die Funktion einer Armlehne für einen Anwender übernimmt, umfasst.

14. Fahrgastsitzanordnung gemäß Anspruch 13, **dadurch gekennzeichnet, dass** die Rückseite durch eine Rücklehne (59) definiert ist und **dadurch, dass** in der verstauten Position eine Oberfläche (68) des Ruhekörpers (64) sich bündig mit einer äußeren Oberfläche (18) der Rücklehne (59) erstreckt.

15. Fahrgastsitzanordnung gemäß Anspruch 13 oder Anspruch 14, **dadurch gekennzeichnet, dass** die Armlehne (61) Führungs- und Verschiebemittel (63, 69) für die Möglichkeit einer Verschiebung des Ruhekörpers (64) in der Längsrichtung (B) umfasst.

16. Fahrgastsitzanordnung gemäß einem der Ansprüche 13 bis 15, **dadurch gekennzeichnet, dass** die Mittel zur Verbindung (66) eine Einstellungsvorrichtung (83) für die Positionierung des Ruhekörpers (64) in mehreren Höhenpositionen umfassen.

17. Fahrgastsitzanordnung gemäß Anspruch 16, **dadurch gekennzeichnet, dass** die Einstellvorrichtung eine klinkenähnliche Vorrichtung (83) umfasst.

18. Fahrgastsitzanordnung gemäß einem der Ansprüche 13 bis 17, **dadurch gekennzeichnet, dass** die Mittel zur Verbindung (66) ein bewegliches Viereck (70) für die Verschiebung des Ruhekörpers (64) in der Höhe umfassen.

19. Fahrgastsitzanordnung gemäß Anspruch 17 und 18, **dadurch gekennzeichnet, dass** die klinkenähnliche Vorrichtung (83) eine Klinke (85), die von dem Ruhekörper (64) getragen wird, und eine Verzahnung (84), die auf einer Verbindungsstrebe (75) des beweglichen Vierecks (70) gebildet ist, umfasst.

20. Fahrgastsitzanordnung gemäß Anspruch 19, **dadurch gekennzeichnet, dass** der Ruhekörper (64) eine Öffnung (91) aufweist und einen Steuerhebel (90) trägt, der als Teil der Öffnung (91) eingreift und manuell für die Entrastung der Klinke (85) aus der Verzahnung (84) betätigt werden kann.

## Revendications

1. Ensemble de siège de passager configurable (3) pour véhicule, l'ensemble de siège de passager comprenant :
- au moins une partie de siège (8), et
- au moins un dossier (10) pouvant être déplacé par rapport à ladite partie de siège (8) entre
a) une position relevée pour recevoir un passager, et
b) une position abaissée dans laquelle ledit dossier (10) repose à plat sur ladite partie de siège (8),
**caractérisé en ce que** ladite partie de siège (8) peut être déplacée dans une direction transversale (A), horizontale et orthogonale à une direction longitudinale (B) d'avance dudit véhicule entre
- une première configuration dans laquelle ladite partie de siège (8) est déplacée, en utilisation, très près d'un siège de conducteur (2) et ledit dossier (10) est disposé dans ladite position abaissée, et
- une deuxième configuration, dans laquelle ladite partie de siège (8) est disposée, en utilisation, transversalement à une distance dudit siège de conducteur (2) et ledit dossier (10) est disposé dans ladite position relevée,
et comprenant un moyen de déplacement (34) destiné à faire effectuer un mouvement de translation à ladite partie de siège (8) entre lesdites première et deuxième configurations en réponse à un déplacement dudit dossier (10) par rapport à ladite partie de siège (8).

2. Ensemble de siège de passager selon la revendication 1, **caractérisé en ce que** ladite partie de siège (8) effectue un mouvement de translation dans ladite direction transversale (A) en réponse à une rotation dudit dossier (10) autour d'un axe d'articulation (15) parallèle à ladite direction transversale (A).

3. Ensemble de siège de passager selon la revendication 2, **caractérisé en ce qu'**il comprend deux sièges (4, 5) disposés de façon adjacente et pouvant être déplacés ensemble dans ladite direction transversale (A) entre lesdites première et deuxième configurations en réponse à ladite rotation dudit dossier (10).

4. Ensemble de siège de passager selon la revendication 3, **caractérisé en ce que** ledit dossier (10) forme une partie d'un siège (5) disposé, en utilisation, dans une position centrale adjacente audit siège de conducteur (2).

5. Ensemble de siège de passager selon l'une quelconque des revendications 2 à 4, **caractérisé en ce que** ladite partie de siège (8) effectue un mouvement de translation dans une direction transversale (A) en réponse à une rotation dudit dossier (10) d'un angle supérieur à 25° par rapport à une direction verticale.

6. Ensemble de siège de passager selon la revendication 5, **caractérisé en ce que** ladite partie de siège (8) effectue un mouvement de translation dans une direction transversale (A) en réponse audit dossier (10) qui est basculé entre ladite position abaissée et ladite position relevée.

7. Ensemble de siège de passager selon l'une quelconque des revendications 2 à 5, **caractérisé en ce que** ledit moyen de déplacement (34) comprend un premier moyen de déplacement (38) destiné faire effectuer un mouvement de translation à ladite partie de siège (38) transversalement dans une première direction en réponse à une rotation dudit dossier (10) dans un premier sens et un deuxième moyen de déplacement (39) destiné à faire effectuer un mouvement de translation à ladite partie de siège (8) dans la direction opposée en réponse à une rotation dudit dossier (10) dans le sens opposé.

8. Ensemble de siège de passager selon l'une quelconque des revendications 2 à 7, **caractérisé en ce que** ledit moyen de déplacement (34) comprend une transmission mécanique.

9. Ensemble de siège de passager selon la revendication 8, **caractérisé en ce qu'**il comprend une structure fixée transversalement (20) et une structure pouvant coulisser transversalement (26) reliées l'une à l'autre, ledit dossier (10) étant supporté par ladite structure pouvant coulisser transversalement (26), ledit moyen de déplacement (34) comprenant un levier (40) qui peut tourner en association avec ledit dossier (10) par rapport à ladite structure pouvant coulisser transversalement (26) autour dudit axe d'articulation (15).

10. Ensemble de siège de passager selon la revendication 9, **caractérisé en ce que** ledit moyen de déplacement (34) comprend une transmission par câbles (38, 39) reliée audit levier (40).

11. Ensemble de siège de passager selon la revendication 10, **caractérisé en ce que** ledit levier est un levier oscillant comprenant deux bras radiaux opposés (41, 42) et **en ce que** ladite transmission comprend deux câbles de Bowden (38, 39) comprenant des gaines respectives (45, 46) et des âmes respectives (43, 44), lesdites âmes (43, 44) comprenant des extrémités respectives, chacune étant fixée à un dit bras radial correspondant (41, 42), lesdites gaines (45, 46) comprenant des premières extrémités respectives reliées à une partie (31b) de ladite structure pouvant coulisser transversalement (26) et des deuxièmes extrémités respectives reliées à ladite structure pouvant coulisser transversalement (26) et, respectivement, à ladite structure fixée transversalement (20).

12. Ensemble de siège de passager selon l'une quelconque des revendications précédentes, **caractérisé par le fait qu'**il comprend au moins un accoudoir (61) disposé sur une face arrière (59) dudit dossier (10).

13. Ensemble de siège de passager selon la revendication 12, **caractérisé en ce que** ledit accoudoir (61) comprend un corps d'appui (64) et un moyen de raccord (66) destiné à déplacer ledit corps d'appui (64) entre une position rangée, dans laquelle il est au moins en partie logé dans ledit dossier (10), et une position extraite dans laquelle il exécute la fonction d'un accoudoir pour un utilisateur.

14. Ensemble de siège de passager selon la revendication 13, **caractérisé en ce que** ladite face arrière est définie par un dossier arrière (59) et **en ce que**, dans ladite position rangée, une surface supérieure (68) dudit corps d'appui (64) s'étend au même niveau qu'une surface extérieure (18) dudit dossier arrière (59).

15. Ensemble de siège de passager selon la revendication 13 ou 14, **caractérisé en ce que** ledit accoudoir (61) comprend un moyen de guidage et de coulissement (63, 69) destiné à permettre un déplacement dudit corps d'appui (64) dans ladite direction longitudinale (B).

16. Ensemble de siège de passager selon l'une quelconque des revendications 13 à 15, **caractérisé en ce que** ledit moyen de raccord (66) comprend un dispositif de réglage (83) destiné à positionner ledit corps d'appui (64) suivant une pluralité de positions en hauteur.

17. Ensemble de siège de passager selon la revendication 16, **caractérisé en ce que** ledit dispositif de réglage comprend un dispositif du type à encliquetage (83).

18. Ensemble de siège de passager selon l'une quelconque des revendications 13 à 17, **caractérisé en ce que** ledit moyen de raccord (66) comprend un quadrilatère articulé (70) destiné à déplacer ledit corps d'appui (64) en hauteur.

19. Ensemble de siège de passager selon les revendications 17 et 18, **caractérisé en ce que** ledit dispositif du type à encliquetage (83) comprend un cliquet (85) supporté par ledit corps d'appui (64) et une denture (84) réalisée sur une tige de raccordement (75) dudit quadrilatère articulé (70).

20. Ensemble de siège de passager selon la revendication 19, **caractérisé en ce que** ledit corps d'appui (64) comporte une ouverture (91) et supporte une commande par levier (90), qui s'engage dans une partie de ladite ouverture (91) et peut être actionnée manuellement pour séparer ledit cliquet (85) de ladite denture (84).
